# EUROPEAN PATENT APPLICATION

(11) **EP 2 874 058 A1**
(43) Date of publication of application: **20.05.2015**
(21) Application number: 12880843.3
(22) Date of filing: 12.07.2012
(51) Int. Cl.: G06F 3/0489

(54) **TERMINAL AND TERMINAL CONTROL METHOD**

(71) Applicant: Yulong Computer Telecommunication Technologies (Shenzhen) Co., Ltd., Guangdong 518057 (CN)
(72) Inventor: GUO, Deying, Shenzhen Guangdong 518057 (CN); LI, Jun, Shenzhen Guangdong 518057 (CN); YUAN, Wu, Shenzhen Guangdong 518057 (CN)
(74) Representative: Michalski Hüttermann & Partner Patentanwälte mbB
(86) International application number: PCT/CN2012/078582
(87) International publication number: WO 2014/008656

(57) **Abstract**

The present invention provides a terminal, comprising a creating unit, configured to create a key operating layer and a content display layer on a screen of the terminal, wherein the key operating layer is positioned above the content display layer; an acquiring unit, configured to acquire function menus corresponding to at least one application program interface in the terminal; a registering unit, configured to register the function menus to the key operating layer; a key setting unit, configured to generate virtual keys for the corresponding function menus according to the application program interface displayed on the screen of the terminal; a content display unit, configured to display the application program interface in the content display layer; and a control unit, configured to control the application program interface according to a virtual key selection command received by the key operating layer. The present invention further provides a terminal control method. Through the technical schemes of the present invention, the control modes of different application programs may be unified, so as to facilitate the operation of users.

## Description

### Field of the Invention

The present invention relates to the technical field of communications, and in particular relates to a terminal and a terminal control method.

### Background of the Invention

The popularization of smart phones gets a great upsurge in application programs and development. Smart phone users may install various application programs downloaded from application stores, network and so on. Some application programs such as address book and short message may also be stored in the phones when the phones leave factories.

On one hand, different application programs are provided with different function menus, and the function menus have different quantity, different functions, different menu icon/region sizes and different positions in application program interfaces, so that when users use different application programs, they must spend certain time in getting familiar with and adapting to the function menus of different application programs.

On the other hand, at present, some application programs adopt graphical menu icons, and first-time users may not accurately judge a specific associated functions of the menu icons. Moreover, even the menu icons for realizing the same function may also be different in different application programs sometimes.

Therefore, a new terminal control method and a new terminal are needed for unifying the control modes of different application program interfaces, so as to facilitate the operation of users and improve user experience.

### Summary of the Invention

Based on the above problems, the present invention provides a new terminal control method and a new terminal, which may unify the control modes of different application program interfaces, so as to facilitate the operation of users and improve user experience.

In view of this, the present invention provides a terminal, including: a creating unit, configured to create a key operating layer and a content display layer on a screen of the terminal, wherein the key operating layer is positioned above the content display layer; an acquiring unit, configured to acquire function menus corresponding to at least one application program interface; a registering unit, configured to register the function menus to the key operating layer; a key setting unit, configured to generate virtual keys for the corresponding function menus according to the application program interface displayed on the screen; a content display unit, configured to display the application program interface in the content display layer; and a control unit, configured to control the application program interface according to a virtual key selection command received by the key operating layer.

In this technical solution, the display positions of the function menus in different application programs and even in different interfaces of the same application program on the screen of the terminal are different, and a user needs to be adapted to the layouts of different operating menus in the using process, so inconvenience is brought to the operation of the user. By setting the key operating layer, the operating menus of all the application program interfaces are registered to the key operating layer, and then the operating menus corresponding to the current application program interface are set as the corresponding virtual keys in the key operating layer according to the current application program interface, so that no matter how the current application program or application program interface is changed, the user may operate the current application program interface in the same manner all the time.

Herein, the process of registering the function menus of the application program interfaces may be completed in the process of installing the application programs. The function menus are displayed in the key operating layer, so that the contents of the application program interfaces in the content display layer may be maximized.

In the above technical solution, preferably, the acquiring unit includes: a menu detecting subunit, configured to detect system menus of an operating system of the terminal; and an interface acquiring subunit, configured to acquire a user interface of at least one system menu, for the registering unit to register the system menus to the key operating layer.

In this technical solution, the terminal provides a running working platform for each application program through hardware and the operating system; various pictures, operating modes, operating functions and the like may be customized in these application programs and may be different from one another, but all the application programs have some general system menus based on the operating system, e.g., screen brightness, volume, exit, backspace and the like, and these system menus provide interfaces for all the application programs to realize unified control of these application programs. These system menus may be registered as corresponding virtual keys and appear in the corresponding key operating layers of all or specified application programs.

In the above technical solution, preferably, the acquiring unit includes: a menu detecting subunit, configured to detect program menus of an application program where the application program interface is located; and an interface acquiring subunit, configured to acquire a user interface of at least one program menu, for the registering unit to register the program menus to the key operating layer.

In this technical solution, for each application program or different application program interfaces of the application program, functions which need to be realized are different, and the corresponding program menus are also different, so each application program or each application program interface and the corresponding program menus may be registered, then when the user enters a certain application program interface, the program menus corresponding to the application program interface may be acquired, and these program menus are set as corresponding virtual keys in the key operating layer.

In the above technical solution, preferably, the terminal further includes: a function self-defining unit, configured to self-define an associated function of at least one virtual key in the key operating layer according to a received self-defining command. In this technical solution, the user may set the corresponding functions of the virtual keys in the key operating layer to match own operating habits and operating modes, so as to achieve better operating experience. The self-defined virtual key herein may be a re-created virtual key or may be set by the user originally in correspondence to a function menu, e.g., in correspondence to a system menu or a program menu.

In the above technical solution, preferably, the key operating layer includes a touch area, and the terminal further includes: a touch unit, configured to generate a corresponding touch command under the condition that a drawn gesture locus matched with a preset locus is sensed in the touch area, to control the application program interface.

In this technical solution, the application program interface may be controlled by receiving the gesture locus drawn by the user besides the virtual key.

In the above technical solution, preferably, the terminal further includes: an associated storage unit, configured to perform associated storage on at least one application program interface in the terminal and the preset locus; and a gesture setting unit, configured to acquire the associated preset locus according to the current application program interface where the key operating layer is located, to match the gesture locus sensed in the touch area.

In this technical solution, each application program interface has different operating functions, all the application program interfaces include many operating functions, and if a preset locus is set for each operating function, the preset loci are numerous and complex in shape, so that it's difficult for the user to memorize, the operation is difficult and error operation is easily caused. Accordingly, a few common loci may be associated with the functions of each application program interface, and the same gesture locus may realize different operating functions in different interfaces, so that the user may conveniently memorize and use the gesture locus.

In the above technical solution, preferably, the terminal further includes: a trigger unit, configured to receive a trigger command; and a trigger processing unit, configured to display the key operating layer and/or conceal the displayed key operating layer on the screen of the terminal according to the trigger command received by the trigger unit.

In this technical solution, the key operating layer may be displayed on the terminal interface all the time, and the contents in the key operating layer are updated likewise when the terminal interface is switched; the key operating layer may also be displayed after being triggered by the user, so that maximum display area is acquired before the operation of the user; and the key operating layer may also be concealed, which is favorable for observation and use of the user likewise.

The process of generating the trigger command includes at least one or the combination of the following manners: the application program interface is touched, the time that the application program interface is pressed exceeds a preset first time threshold, the time that a specified area of the application program interface is focused by the sight of the user exceeds a preset second time threshold, a specified physical key on the terminal is pressed, the application program interface receives a gesture graph matched with a preset pattern, and a preset identifier on the application program interface is selected.

In the above technical solution, preferably, the terminal further includes: an attribute setting unit, configured to set the display attribute of the virtual keys in the key operating layer according to the received setting command.

In this technical solution, the display attribute of the virtual keys includes the quantity, size, shape, transparency, character or graphic display of the virtual keys, which may be set by a manufacturer or a user as required.

According to another aspect of the present invention, further provided is a terminal control method, including: step 202, creating a key operating layer and a content display layer on a screen of a terminal; step 204, acquiring function menus corresponding to at least one application program interface in the terminal, and registering the function menus to the key operating layer; step 206, generating virtual keys for the corresponding operating menus in the key operating layer according to the application program interface displayed on the screen of the terminal, and displaying the application program interface in the content display layer; and step 208, displaying the key operating layer above the content display layer, and controlling the application program interface according to a received selection command for the virtual keys.

In this technical solution, the display positions of the function menus in different application programs and even in different interfaces of the same application program on the screen of the terminal are different, and a user needs to be adapted to the layouts of different operating menus in the using process, so inconvenience is brought to the operation of the user. By setting the key operating layer, the operating menus of all the application program interfaces are registered to the key operating layer, and then the operating menus corresponding to the current application program interface are set as the corresponding virtual keys in the key operating layer according to the current application program interface, so that no matter how the current application program or application program interface is changed, the user may operate the current application program interface in the same manner all the time.

Herein, the process of registering the function menus of the application program interfaces may be completed in the process of installing the application programs. The function menus are displayed in the key operating layer, so that the contents of the application program interfaces in the content display layer may be maximized.

In the above technical solution, preferably, step 204 includes: detecting system menus of an operating system of the terminal, acquiring a user interface of at least one system menu, and registering the system menus to the key operating layer.

In this technical solution, the terminal provides a running working platform for each application program through hardware and the operating system; various pictures, operating modes, operating functions and the like may be customized in these application programs and may be different from one another, but all the application programs have some general system menus based on the operating system, e.g., screen brightness, volume, exit, backspace and the like, and these system menus provide interfaces for all the application programs to realize unified control of these application programs. These system menus may be registered as corresponding virtual keys and appear in the corresponding key operating layers of all or specified application programs.

In the above technical solution, preferably, step 204 includes: detecting program menus of an application program where the application program interface is located, acquiring a user interface of at least one program menu, and registering the program menus to the key operating layer.

In this technical solution, for each application program or different application program interfaces of the application program, functions which need to be realized are different, and the corresponding program menus are also different, so each application program or each application program interface and the corresponding program menus may be registered, then when the user enters a certain application program interface, the program menus corresponding to the application program interface may be acquired, and these program menus are set as corresponding virtual keys in the key operating layer.

In the above technical solution, preferably, step 204 further includes: self-defining an associated function of at least one virtual key in the key operating layer according to a received self-defining command.

In this technical solution, the user may set the corresponding functions of the virtual keys in the key operating layer to match own operating habits and operating modes, so as to achieve better operating experience. The self-defined virtual key herein may be a re-created virtual key or be set by the user originally in correspondence to a function menu, e.g., in correspondence to a system menu or a program menu.

In the above technical solution, preferably, the key operating layer includes a touch area, and step 208 further includes: if a drawn gesture locus matched with a preset locus is sensed in the touch area, generating a corresponding touch command to control the application program interface.

In this technical solution, the application program interface may be controlled by receiving the gesture locus drawn by the user besides the virtual key.

In the above technical solution, preferably, the terminal control method further includes: performing associated storage on at least one application program interface in the terminal and the preset locus; and acquiring the associated preset locus according to the current application program interface where the key operating layer is located, to match the gesture locus sensed in the touch area.

In this technical solution, each application program interface has different operating functions, all the application program interfaces include many operating functions, and if a preset locus is set for each operating function, the preset loci are numerous and complex in shape, so that it's difficult for the user to memorize, the operation is difficult and error operation is easily caused. Accordingly, a few common loci may be associated with the functions of each application program interface, and the same gesture locus may realize different operating functions in different interfaces, so that the user may conveniently memorize and use the gesture locus.

In the above technical solution, preferably, the terminal control method further includes: displaying the key operating layer and/or concealing the displayed key operating layer on the screen of the terminal according to the received trigger command.

In this technical solution, the key operating layer may be displayed on the terminal interface all the time, and the contents in the key operating layer are updated likewise when the terminal interface is switched; the key operating layer may also be displayed after being triggered by the user, so that maximum display area is acquired before the operation of the user; and the key operating layer may also be concealed, which is favorable for observation and use of the user likewise.

The process of generating the trigger command includes at least one or the combination of the following manners: the application program interface is touched, the time that the application program interface is pressed exceeds a preset first time threshold, the time that a specified area of the application program interface is focused by the sight of the user exceeds a preset second time threshold, a specified physical key on the terminal is pressed, the application program interface receives a gesture graph matched with a preset pattern, and a preset identifier on the application program interface is selected.

In the above technical solution, preferably, the terminal control method further includes: setting the display attribute of the virtual keys in the key operating layer according to the received setting command.

In this technical solution, the display attribute of the virtual keys includes the quantity, size, shape, transparency, character or graphic display of the virtual keys, which may be set by a manufacturer or a user as required.

Through the above technical solutions, the control modes of different application program interfaces may be unified, so as to facilitate the operation of the user and improve the user experience.

### Brief Description of the Drawings

Fig. 1 shows a block diagram of a terminal according to an embodiment of the present invention;
Fig. 2 shows a flow diagram of a terminal control method according to an embodiment of the present invention;
Fig. 3A to Fig. 3D show schematic diagrams of controlling the terminal according to embodiments of the present invention.

### Detailed Description of the Embodiments

To understand the above objectives, features and advantages of the present invention more clearly, the present invention will be further described in detail below in combination with the accompanying drawings and specific embodiments. It should be noted that, the embodiments of the present application and the features in the embodiments may be combined with one another in the absence of conflicts.

Many specific details will be described below for sufficiently understanding the present invention. However, the present invention may also be implemented in other manners different from the descriptions herein. Accordingly, the protection scope of the present invention is not limited to the specific embodiments disclosed below.

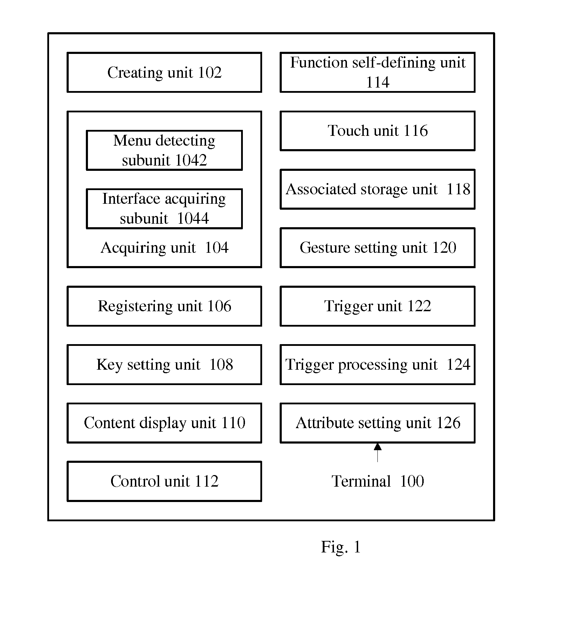

Fig. 1 shows a block diagram of a terminal according to an embodiment of the present invention.

As shown in Fig. 1, a terminal 100 according to the embodiment of the present invention includes: a creating unit 102, an acquiring unit 104, a registering unit 106, a key setting unit 108, a content display unit 110 and a control unit 112. The creating unit 102 is configured to create a key operating layer and a content display layer on a screen of the terminal 100, wherein the key operating layer is positioned above the content display layer. The acquiring unit 104 is configured to acquire function menus corresponding to at least one application program interface in the terminal 100. The registering unit 106 is configured to register the function menus to the key operating layer. The key setting unit 108 is configured to generate virtual keys for the corresponding function menus according to the application program interface displayed on the screen of the terminal 100. The content display unit 110 is configured to display the application program interface in the content display layer. The control unit 112 is configured to control the application program interface according to a virtual key selection command received by the key operating layer.

In this technical solution, the display positions of the function menus in different application programs and even in different interfaces of the same application program on the screen of the terminal are different, and a user needs to be adapted to the layouts of different operating menus in the using process, so inconvenience is brought to the operation of the user. By setting the key operating layer, the operating menus of all the application program interfaces are registered to the key operating layer, and then the operating menus corresponding to the current application program interface are set as the corresponding virtual keys in the key operating layer according to the current application program interface, so that no matter how the current application program or application program interface is changed, the user may operate the current application program interface in the same manner all the time.

Herein, the process of registering the function menus of the application program interfaces may be completed in the process of installing the application programs. The function menus are displayed in the key operating layer, so that the contents of the application program interfaces in the content display layer may be maximized.

In the above technical solution, preferably, the acquiring unit 104 includes: a menu detecting subunit 1042 and an interface acquiring subunit 1044. The menu detecting subunit 1042 is configured to detect system menus of an operating system of the terminal 100. The interface acquiring subunit 1044 is configured to acquire a user interface of at least one system menu, so that the registering unit 106 registers the system menus to the key operating layer.

In this technical solution, the terminal 100 provides a running working platform for each application program through hardware and the operating system. Various pictures, operating modes, operating functions and the like may be customized in these application programs and may be different from one another, but all the application programs have some general system menus based on the operating system, e.g., screen brightness, volume, exit, backspace and the like, and these system menus provide interfaces for all the application programs to realize unified control of these application programs. These system menus may be registered as corresponding virtual keys and appear in the corresponding key operating layers of all or specified application programs.

In the above technical solution, preferably, the acquiring unit 104 includes: a menu detecting subunit 1042, configured to detect program menus of an application program where the application program interface is located; and an interface acquiring subunit 1044, configured to acquire a user interface of at least one program menu, so that the registering unit 106 registers the program menus to the key operating layer.

In this technical solution, for each application program or different application program interfaces of the application program, functions which need to be realized are different, and the corresponding program menus are also different, so each application program or each application program interface and the corresponding program menus may be registered, then when the user enters a certain application program interface, the program menus corresponding to the application program interface may be acquired, and these program menus are set as corresponding virtual keys in the key operating layer.

In the above technical solution, preferably, the terminal further includes: a function self-defining unit 114, configured to self-define an associated function of at least one virtual key in the key operating layer according to a received self-defining command. In this technical solution, the user may set the corresponding functions of the virtual keys in the key operating layer to match own operating habits and operating modes, so as to achieve better operating experience. The self-defined virtual key herein may be a re-created virtual key or be set by the user originally in correspondence to a function menu, e.g., in correspondence to a system menu or a program menu.

In the above technical solution, preferably, the key operating layer includes a touch area, and the terminal 100 further includes: a touch unit 116, configured to generate a corresponding touch command under the condition that a drawn gesture locus matched with a preset locus is sensed in the touch area, to control the application program interface.

In this technical solution, the application program interface may be controlled by receiving the gesture locus drawn by the user besides the virtual key.

In the above technical solution, preferably, the terminal further includes: an associated storage unit 118, configured to perform associated storage on at least one application program interface in the terminal 100 and the preset locus; and a gesture setting unit 120, configured to acquire the associated preset locus according to the current application program interface where the key operating layer is located, to match the gesture locus sensed in the touch area.

In this technical solution, each application program interface has different operating functions, all the application program interfaces include many operating functions, and if a preset locus is set for each operating function, the preset loci are numerous and complex in shape, so that it's difficult for the user to memorize, the operation is difficult and error operation is easily caused. Accordingly, a few common loci may be associated with the functions of each application program interface, and the same gesture locus may realize different operating functions in different interfaces, so that the user may conveniently memorize and use the gesture locus.

In the above technical solution, preferably, the terminal further includes: a trigger unit 122, configured to receive a trigger command; and a trigger processing unit 124, configured to display the key operating layer and/or conceal the displayed key operating layer on the screen of the terminal 100 according to the trigger command received by the trigger unit.

In this technical solution, the key operating layer may be displayed on the terminal interface all the time, and the contents in the key operating layer are updated likewise when the terminal interface is switched; the key operating layer may also be displayed after being triggered by the user, so that maximum display area is acquired before the operation of the user; and the key operating layer may also be concealed, which is favorable for observation and use of the user likewise.

The process of generating the trigger command includes at least one or the combination of the following manners: the application program interface is touched, the time that the application program interface is pressed exceeds a preset first time threshold, the time that a specified area of the application program interface is focused by the sight of the user exceeds a preset second time threshold, a specified physical key on the terminal 100 is pressed, the application program interface receives a gesture graph matched with a preset pattern, and a preset identifier on the application program interface is selected.

In the above technical solution, preferably, the terminal further includes: an attribute setting unit 126, configured to set the display attribute of the virtual keys in the key operating layer according to the received setting command.

In this technical solution, the display attribute of the virtual keys includes the quantity, size, shape, transparency, character or graphic display of the virtual keys, which may be set by a manufacturer or a user as required.

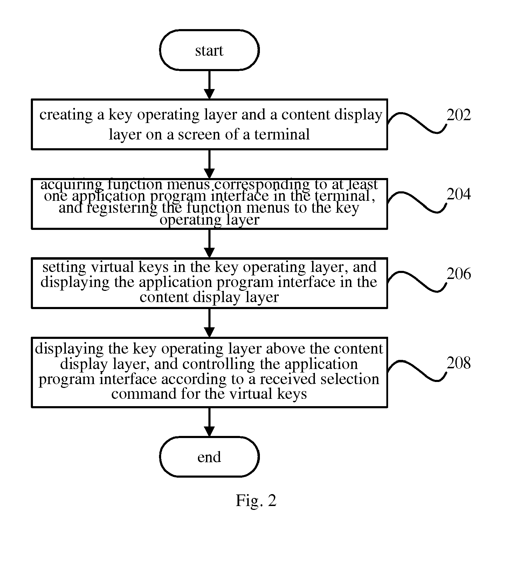

Fig. 2 shows a flow diagram of a terminal control method according to an embodiment of the present invention.

As shown in Fig. 2, the terminal control method according to the embodiment of the present invention includes: step 202, creating a key operating layer and a content display layer on a screen of a terminal; step 204, acquiring function menus corresponding to at least one application program interface in the terminal, and registering the function menus to the key operating layer; step 206, generating virtual keys for the corresponding operating menus in the key operating layer according to the application program interface displayed on the screen of the terminal, and displaying the application program interface in the content display layer; and step 208, displaying the key operating layer above the content display layer, and controlling the application program interface according to a received selection command for the virtual keys.

In this technical solution, the display positions of the function menus in different application programs and even in different interfaces of the same application program on the screen of the terminal are different, and a user needs to be adapted to the layouts of different operating menus in the using process, so inconvenience is brought to the operation of the user. By setting the key operating layer, the operating menus of all the application program interfaces are registered to the key operating layer, and then the operating menus corresponding to the current application program interface are set as the corresponding virtual keys in the key operating layer according to current application program interface, so that no matter how the current application program or application program interface is changed, the user may operate the current application program interface in the same manner all the time.

Herein, the process of registering the function menus of the application program interfaces may be completed in the process of installing the application programs. The function menus are displayed in the key operating layer, so that the contents of the application program interfaces in the content display layer may be maximized.

In the above technical solution, preferably, step 204 includes: detecting system menus of an operating system of the terminal, acquiring a user interface of at least one system menu, and registering the system menus to the key operating layer.

In this technical solution, the terminal provides a running working platform for each application program through hardware and the operating system; various pictures, operating modes, operating functions and the like may be customized in these application programs and may be different from one another, but all the application programs have some general system menus based on the operating system, e.g., screen brightness, volume, exit, backspace and the like, and these system menus provide interfaces for all the application programs to realize unified control of these application programs. These system menus may be registered as corresponding virtual keys and appear in the corresponding key operating layers of all or specified application programs.

In the above technical solution, preferably, step 204 includes: detecting program menus of an application program where the application program interface is located, acquiring a user interface of at least one program menu, and registering the program menus to the key operating layer.

In this technical solution, for each application program or different application program interfaces of the application program, functions which need to be realized are different, and the corresponding program menus are also different, so each application program or each application program interface and the corresponding program menus may be registered, then when the user enters a certain application program interface, the program menus corresponding to the application program interface may be acquired, and these program menus are set as corresponding virtual keys in the key operating layer.

In the above technical solution, preferably, step 204 further includes: self-defining an associated function of at least one virtual key in the key operating layer according to a received self-defining command.

In this technical solution, the user may set the corresponding functions of the virtual keys in the key operating layer to match own operating habits and operating modes, so as to achieve better operating experience. The self-defined virtual key herein may be a re-created virtual key or may be set by the user originally in correspondence to a function menu, e.g., in correspondence to a system menu or a program menu.

In the above technical solution, preferably, the key operating layer includes a touch area, and step 208 further includes: if a drawn gesture locus matched with a preset locus is sensed in the touch area, generating a corresponding touch command to control the application program interface.

In this technical solution, the application program interface may be controlled by receiving the gesture locus drawn by the user besides the virtual key.

In the above technical solution, preferably, the terminal control method further includes: performing associated storage on at least one application program interface in the terminal and the preset locus; and acquiring the associated preset locus according to the current application program interface where the key operating layer is located, to match the gesture locus sensed in the touch area.

In this technical solution, each application program interface has different operating functions, all the application program interfaces include many operating functions, and if a preset locus is set for each operating function, the preset loci are numerous and complex in shape, so that it's difficult for the user to memorize, the operation is difficult and error operation is easily caused. Accordingly, a few common loci may be associated with the functions of each application program interface, and the same gesture locus may realize different operating functions in different interfaces, so that the user may conveniently memorize and use the gesture locus.

In the above technical solution, preferably, the terminal control method further includes: displaying the key operating layer and/or concealing the displayed key operating layer on the screen of the terminal according to the received trigger command.

In this technical solution, the key operating layer may be displayed on the terminal interface all the time, and the contents in the key operating layer are updated likewise when the terminal interface is switched; the key operating layer may also be displayed after being triggered by the user, so that maximum display area is acquired before the operation of the user; and the key operating layer may also be concealed, which is favorable for observation and use of the user likewise.

The process of generating the trigger command includes at least one or the combination of the following manners: the application program interface is touched, the time that the application program interface is pressed exceeds a preset first time threshold, the time that a specified area of the application program interface is focused by the sight of the user exceeds a preset second time threshold, a specified physical key on the terminal is pressed, the application program interface receives a gesture graph matched with a preset pattern, and a preset identifier on the application program interface is selected.

In the above technical solution, preferably, the terminal control method further includes: setting the display attribute of the virtual keys in the key operating layer according to the received setting command.

In this technical solution, the display attribute of the virtual keys includes the quantity, size, shape, transparency, character or graphic display of the virtual keys, which may be set by a manufacturer or a user as required.

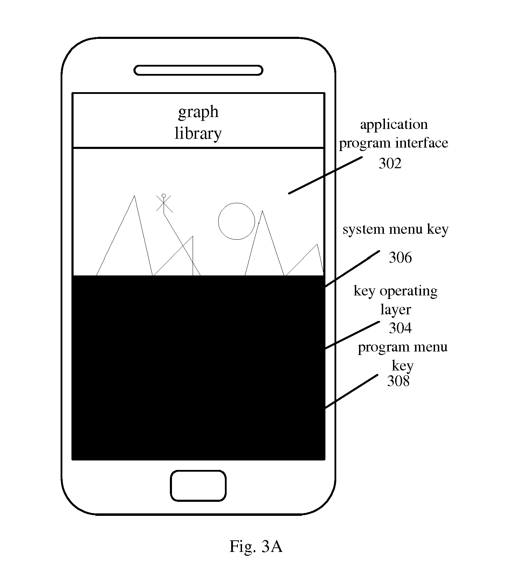

Fig. 3A to Fig. 3D show schematic diagrams of controlling the terminal according to embodiments of the present invention.

As shown in Fig. 3A, according to a technical solution of the present invention, a key operating layer 304 is displayed on an application program interface 302, the key operating layer 304 includes at least one virtual key, the virtual keys may be system menu keys 306 and/or program menu keys 308, and a user selects and clicks the virtual key to generate a control instruction so as to control the application program interface 302.

The application program interface 302 is displayed on a content display layer of a screen of a terminal, and the key operating layer 304 is arranged above the content display layer and used for controlling the contents in the content display layer.

The system menu keys 306 in the key operating layer 304 correspond to system menus of an operating system of the terminal, e.g., "exit", "backspace" and the like in the figure, all the application programs have some general system menus based on the operating system, and these system menus provide interfaces for all the application programs to realize unified control of these application programs.

The program menu keys 308 in the key operating layer 304 aim at each application program or different application program interfaces in the application program, e.g., "next", "last", "zoom in", "zoom out" and the like, so each application program or each application program interface and the corresponding program menus may be registered, then when the user enters a certain application program interface, the program menus corresponding to the application program interface may be acquired, and these program menus are set as the corresponding virtual keys in the key operating layer.

Thus, the system menus or the program menus are registered to the key operating layer 304, and the application program interfaces 302 are controlled through the key operating layer 304, so that different application program interfaces 302 are operated in a unified manner, convenience is brought to the use of the user, and the user does not need to be adapted to different layout manners of different application program interfaces.

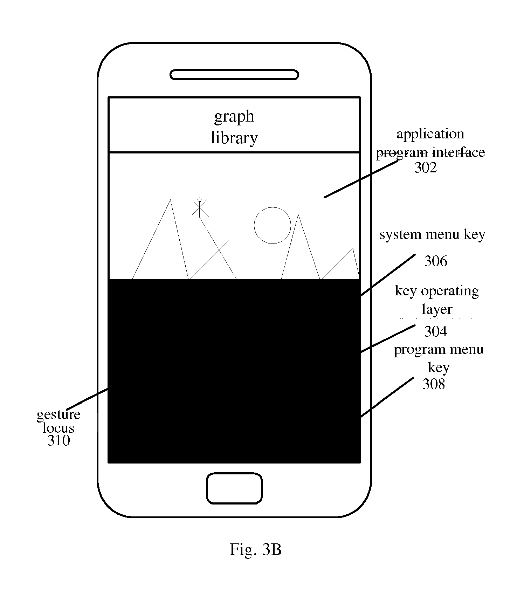

As shown in Fig. 3B, besides the virtual keys (the system menu keys 306 and the program menu keys 308), the application program interface 302 may be controlled likewise by setting a touch area in the key operating layer 304, receiving a gesture locus 310 drawn by a user and comparing the gesture locus 310 with a preset locus to generate a corresponding control instruction.

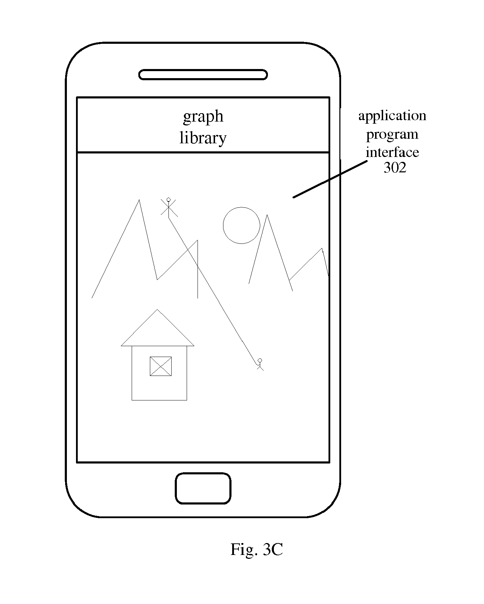

Function menus are converted into virtual keys in the key operating layer 304, the application program interface 302 is displayed in the original area for setting the function menus, as shown in Fig. 3C, and the key operating layer 304 is concealed, so that the whole screen of the terminal is used for displaying the application program interface 302, and better user experience is brought to the user.

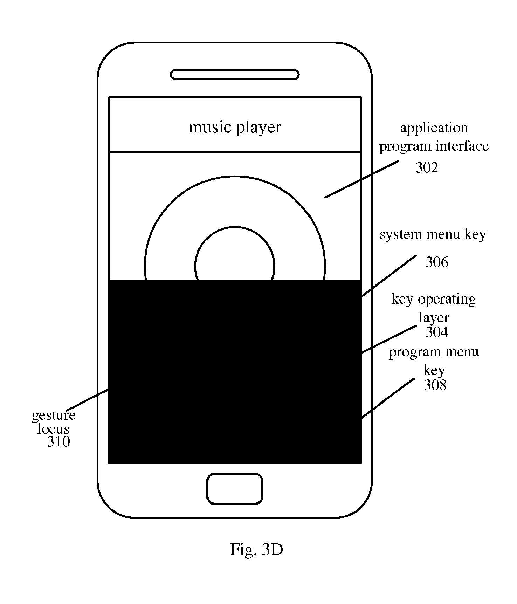

Fig. 3D shows an application program interface 302 of another application program "music player", the key operating layer 304 may be arranged above the content display layer likewise, and the application program interface 302 may be controlled through system menu keys 306 and/or program menu keys 308 in the key operating layer 304 or through drawing a gesture locus 310 in the touch area.

The user may set the display attributes of the virtual keys, e.g., size, shape, color and quantity of the virtual keys and character or graph and the like display therein. The program menu keys 308 in Fig. 3D have been set for displaying with graphs, so that the display effect is better and the operating process is more interesting.

The technical solutions of the present invention are described in detail above in combination with the accompanying drawings. The layouts of the function menus of the operating interfaces of different application programs in related technologies are different from one another and are not favorable for the operation of users, so the present invention provides a terminal and a terminal control method, which may be used for unifying the control manners of different application program interfaces, thus facilitating the operation of the users and improving the user experience.

The foregoing descriptions are merely preferred embodiments of the present invention, rather than limiting the present invention. Various modifications and alterations may be made to the present invention for those skilled in the art. Any modification, equivalent substitution, improvement or the like made within the spirit and principle of the present invention should be included within the protection scope of the present invention.

## Claims

1. A terminal, comprising:
a creating unit, configured to create a key operating layer and a content display layer on a screen of the terminal, wherein the key operating layer is positioned above the content display layer;
an acquiring unit, configured to acquire function menus corresponding to at least one application program interface;
a registering unit, configured to register the function menus to the key operating layer;
a key setting unit, configured to generate virtual keys for the corresponding function menus according to the application program interface displayed on the screen;
a content display unit, configured to display the application program interface in the content display layer; and
a control unit, configured to control the application program interface according to a virtual key selection command received by the key operating layer.

2. The terminal of claim 1, wherein the acquiring unit comprises:
a menu detecting subunit, configured to detect system menus of an operating system of the terminal; and
an interface acquiring subunit, configured to acquire a user interface of at least one system menu, for the registering unit to register the system menus to the key operating layer.

3. The terminal of claim 1, wherein the acquiring unit comprises:
a menu detecting subunit, configured to detect program menus of an application program where the application program interface is located; and
an interface acquiring subunit, configured to acquire a user interface of at least one program menu, for the registering unit to register the program menu to the key operating layer.

4. The terminal of claim 1, further comprising:
a function self-defining unit, configured to self-define an associated function of at least one virtual key in the key operating layer according to a received self-defining command.

5. The terminal of any of claims 1-4, wherein the key operating layer comprises a touch area, and the terminal further comprises:
a touch unit, configured to generate a corresponding touch command to control the application program interface under the condition that a drawn gesture locus matched with a preset locus is sensed in the touch area.

6. The terminal of claim 5, further comprising:
an associated storage unit, configured to perform associated storage on at least one application program interface in the terminal and the preset locus; and
a gesture setting unit, configured to acquire the associated preset locus according to the current application program interface where the key operating layer is located, to match the gesture locus sensed in the touch area.

7. The terminal of any of claims 1-4, further comprising:
a trigger unit, configured to receive a trigger command; and
a trigger processing unit, configured to display the key operating layer and/or conceal the displayed key operating layer according to the trigger command received by the trigger unit.

8. The terminal of any of claims 1-4, further comprising:
an attribute setting unit, configured to set the display attribute of the virtual keys in the key operating layer according to the received setting command.

9. A terminal control method, comprising:
step 202, creating a key operating layer and a content display layer on a screen of a terminal;
step 204, acquiring function menus corresponding to at least one application program interface, and registering the function menus to the key operating layer;
step 206, generating virtual keys for the corresponding operating menus in the key operating layer according to the application program interface displayed on the screen,
and displaying the application program interface in the content display layer; and
step 208, displaying the key operating layer above the content display layer, and
controlling the application program interface according to a received selection command for the virtual keys.

10. The terminal control method of claim 9, wherein step 204 comprises:
detecting system menus of an operating system of the terminal, acquiring a user interface of at least one system menu, and registering the system menus to the key operating layer.

11. The terminal control method of claim 9, wherein step 204 comprises:
detecting program menus of an application program where the application program interface is located, acquiring a user interface of at least one program menu, and
registering the program menus to the key operating layer.

12. The terminal control method of claim 9, wherein step 204 further comprises:
self-defining an associated function of at least one virtual key in the key operating layer according to a received self-defining command.

13. The terminal control method of any of claims 9-12, wherein the key operating layer comprises a touch area, and step 208 further comprises:
if a drawn gesture locus matched with a preset locus is sensed in the touch area,
generating a corresponding touch command to control the application program interface.

14. The terminal control method of claim 13, further comprising:
performing associated storage on at least one application program interface in the terminal and the preset locus; and
acquiring the associated preset locus according to the current application program interface where the key operating layer is located, to match the gesture locus sensed in the touch area.

15. The terminal control method of any of claims 9-12, further comprising:
displaying the key operating layer and/or concealing the displayed key operating layer according to the received trigger command.

16. The terminal control method of any of claims 9-12, further comprising:
setting the display attribute of the virtual keys in the key operating layer according to the received setting command.
